# EUROPEAN PATENT SPECIFICATION

(11) **EP 4 410 498 B1**
(45) Date of publication and mention of the grant of the patent: **29.04.2026**
(21) Application number: 23218181.8
(22) Date of filing: 19.12.2023
(51) Int. Cl.: B25J 9/16

(54) **JIG POSITIONING SYSTEM**
POSITIONIERSYSTEM FÜR SPANNVORRICHTUNG
SYSTÈME DE POSITIONNEMENT DE GABARIT

(30) Priority: 02.02.2023 JP 2023014365
(43) Date of publication of application: 07.08.2024
(73) Proprietor: Subaru Corporation, Tokyo 150-8554 (JP)
(72) Inventor: MURAI, Kenji, Tokyo, 150-8554 (JP); SAITO, Kenji, Tokyo, 150-8554 (JP); MIYAUCHI, Tomohiro, Tokyo, 150-8554 (JP); MIYAWAKI, Yudai, Tokyo, 150-8554 (JP); MATSUMOTO, Yohei, Tokyo, 150-8554 (JP); TANAKA, Kaito, Tokyo, 150-8554 (JP)
(74) Representative: Vossius & Partner Patentanwälte Rechtsanwälte mbB

(56) References cited:
- KUKA - ROBOTS & AUTOMATION: "Fixture Handling with KUKA Robotics at Vischer & Bolli", 19 February 2018 (2018-02-19), XP093168387, Retrieved from the Internet <URL:https://www.youtube.com/watch?v=EFbMJ_hY-Pw> [retrieved on 20240530]
- F. GIUSTI: "Robotized Assembly of Modular Fixtures", vol. 40, no. 1, 31 December 1991 (1991-12-31), NL, CH, FR, pages 17 - 20, XP093168505, ISSN: 0007-8506, Retrieved from the Internet <URL:https://www.sciencedirect.com/science/article/pii/S0007850607619246> DOI: 10.1016/S0007-8506(07)61924-6
- Y HSHIMOTO: "Fundamental study on robotic assembly of modular fixture parts by a low cost 4-finger 12 d.o.f. hand", 11 December 2015 (2015-12-11), pages 930 - 935, XP093168493, Retrieved from the Internet <URL:https://ieeexplore.ieee.org/stampPDF/getPDF.jsp?tp=&arnumber=7405137&ref=aHR0cHM6Ly9pZWVleHBsb3JlLmllZWUub3JnL2RvY3VtZW50Lzc0MDUxMzc=>
- H ASADA: "Kinematic Analysis of Workpart Fixturing for Flexible Assembly with Automatically", E JOURNAL OF ROBOTICS AND AUTOMATION VOL. RA-I, NO. 2, 30 June 1985 (1985-06-30), pages 86 - 94, XP093168859, Retrieved from the Internet <URL:https://ieeexplore.ieee.org/document/1087007>
- B K A NGOI: "Technolog[i Development of an Automated Fixture Set-up System for Inspection", 31 May 1997 (1997-05-31), pages 342 - 349, XP093168860, Retrieved from the Internet <URL:https://link.springer.com/content/pdf/10.1007/BF01178254.pdf>
- "Chapter 7 (7.4-7.6) & Chapter 10 (10.1-10.4) ED - Gorinevsky D M; Formalsky A M; Schneider A Yu", 31 December 1997, FORCE CONTROL OF ROBOTICS SYSTEMS, CRC PRESS LCC, PAGE(S) 200-219, 283, ISBN: 978-0-8493-2671-4, XP002778660
- OH S-R ET AL: "PRECISION ASSEMBLY WITH A MAGNETICALLY LEVITATED WRIST", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, vol. 1, 3 May 1993 (1993-05-03), pages 127 - 134, XP000410176, ISBN: 978-0-8186-3450-5, DOI: 10.1109/ROBOT.1993.291972
- HOSSEIN TOHIDI: "Changeability Planning Of Modular Fixtures In A Robotic Assembly System To Manage Product Variety", 30 July 2016 (2016-07-30), pages 1 - 78, XP093168496, Retrieved from the Internet <URL:https://conservancy.umn.edu/items/c0b2680f-ee43-4fea-b58a-7651d406a307> [retrieved on 20240530]

## Description

### BACKGROUND

### Technical Field

The disclosure relates to a jig positioning system for positioning assembly jigs on an assembly table.

### Related Art

A typical aircraft includes geometrically similar assembly components. The assembly components are put into subassemblies, each of which is fabricated by using assembly jigs for locating assembly components or fastening assembly components in place. In course of this process, the assembly components are coupled together with rivets, or pilot holes are drilled into the assembly components. The assembly components are geometrically similar but yet substantially differ in their shapes, and the use of assembly jigs designed for the respective assembly components leads to increases in cost.

As a proposed workaround to this problem, an assembly jig disclosed in, for example, Japanese Unexamined Patent Application Publication (JP-A) No. 2005-153094 includes faceplates that can shift with respect to a base to conform to the shapes of assembly components.

The youtube-video "Fixture Handling with KUKA Robotics at Vischer & Bolli" (URL:https://www.youtube.com/watch?v=EFbMJ hY-Pw) shows a KUKA robot which combined workpiece, fixture and tool handling.

The article "Robotized Assembly of Modular Fixtures" by F. Giusti et al. (Annals of the CIRP, Vol. 40/1/1991) describes a prototype plant for the robotized assembly of modular fixtures for NC machining centers.

The article "Fundamental study on robotic assembly of modular fixture parts by a low cost 4-finger 12 d.o.f. hand", by Y. Hashimoto et al. (IEEE/SICE International Symposium on System Integration, December 11-13, 2015) , describes a robotic manipulator for the assembly of modular fixtures.

### SUMMARY

The invention is defined in the appended claims. Aspects, embodiments and examples disclosed herein which do not fall within the scope of the appended claims do not form part of the invention and are merely provided for illustrative purposes.

An aspect of the disclosure provides a jig positioning system including a robot arm and a control unit. The robot arm is configured to grip an assembly jig designed to be positioned on an assembly table. The control unit is configured to control motion of the robot arm. The control unit is configured to cause the robot arm: to grip one or more assembly jigs including the assembly jig that are to be selected in sequence for assembly components; and to adjust position and orientation of each of the one or more assembly jigs in accordance with shapes of the assembly components in course of positioning of the one or more assembly jigs on the assembly table.

### BRIEF DESCRIPTION OF THE DRAWINGS

The accompanying drawings are included to provide a further understanding of the disclosure and are incorporated in and constitute a part of this specification. The drawings illustrate an embodiment and, together with the specification, serve to describe the principles of the disclosure.
FIG. 1 is a perspective view of the principal part of a jig positioning system according to an embodiment;
FIG. 2 is a block diagram illustrating the schematic configuration of the jig positioning system according to the embodiment;
FIG. 3A is a perspective view of a locator according to the embodiment;
FIG. 3B is a side view of a fixation pin and a grip pin of the locator according to the embodiment;
FIG. 4A is a plan view of a base according to the embodiment;
FIG. 4B is an enlarged view of holes in one of the divisions of a base according to the embodiment;
FIG. 5 is provided for the purpose of describing a fit between the fixation pin of the locator and a hole of the base according to the embodiment; and
FIG. 6 is a flowchart of a jig positioning procedure according to the embodiment.

### DETAILED DESCRIPTION

According to the technique disclosed in JP-A No. 2005-153094, the assembly jig undergoes adjustments made by using manpower (manual work) for the respective assembly components. The preparations for the adjustments consume man-hours. Furthermore, there is the possibility of human error.

It is desirable to position assembly jigs suitably for the respective assembly components.

Hereinafter, an embodiment of the disclosure is described with reference to the accompanying drawings. Note that the following description is directed to an illustrative example of the disclosure and not to be construed as limiting to the disclosure. Factors including, without limitation, numerical values, shapes, materials, components, positions of the components, and how the components are coupled to each other are illustrative only and not to be construed as limiting to the disclosure. Further, elements in the following example embodiment which are not recited in a most-generic independent claim of the disclosure are optional and may be provided on an as-needed basis. The drawings are schematic and are not intended to be drawn to scale. Throughout the present specification and the drawings, elements having substantially the same function and configuration are denoted with the same numerals to avoid any redundant description.

### Configuration of Jig Positioning System

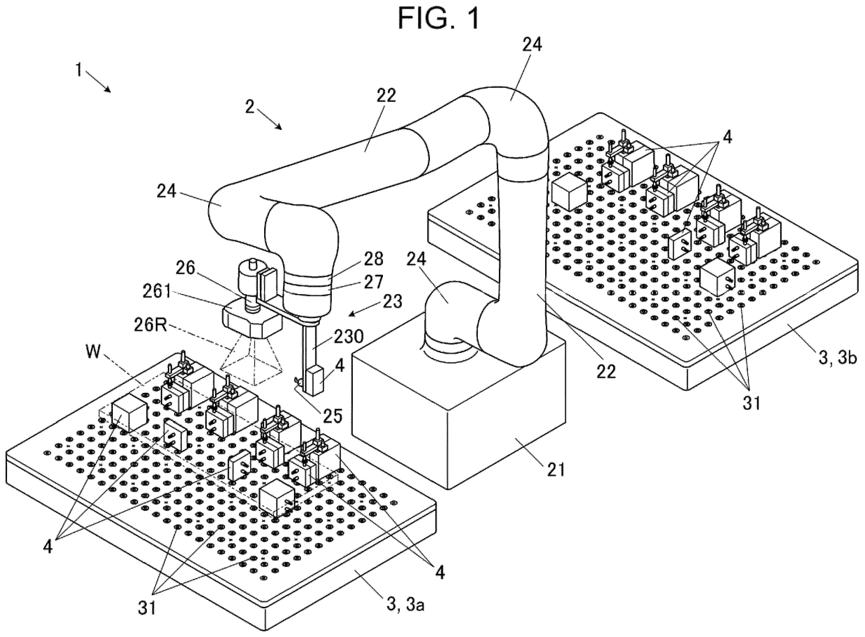

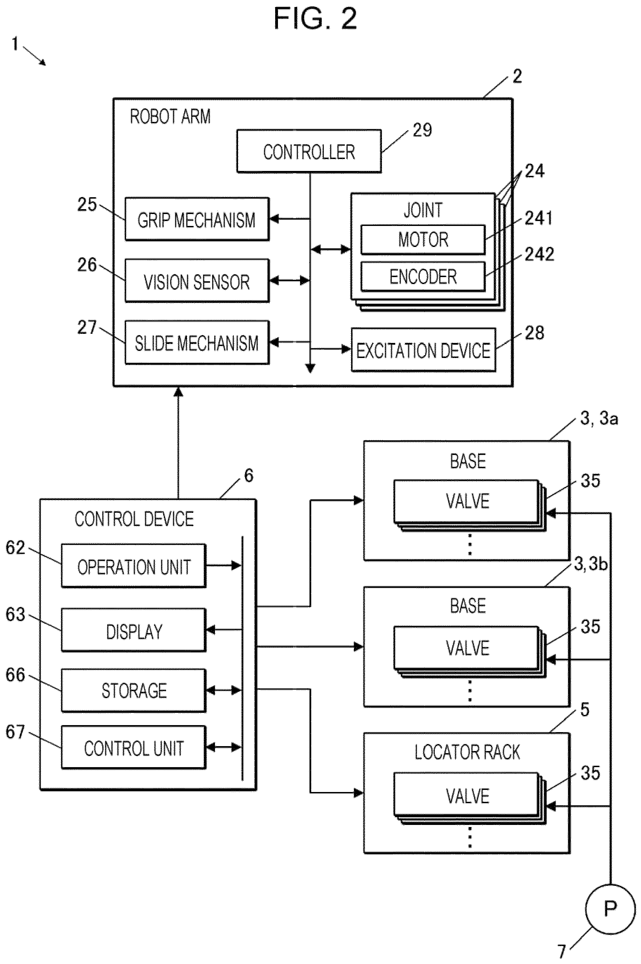

FIG. 1 is a perspective view of the principal part of a jig positioning system 1 according to the present embodiment. FIG. 2 is a block diagram illustrating the schematic configuration of the jig positioning system 1.

As illustrated in FIGs. 1 and 2, the jig positioning system 1 builds a workbench where a predetermined assembly task is performed on workpieces (assembly components) W. In course of building the workbench, locators (assembly jigs) 4 for use in, for example, locating the workpieces W or fastening the workpieces W in place are arranged on a base (assembly table) 3. For example, the jig positioning system 1 according to the present embodiment relocates the locators 4 by interchanging the locators 4 between two bases 3 (3a, 3b). The workpieces W in the present embodiment are aircraft parts. In course of the assembly task, for example, the workpieces W are coupled together with rivets, or pilot holes are drilled into the workpieces W.

In one example, the jig positioning system 1 includes, in addition to the two bases 3, a robot arm 2, a locator rack 5, and a control device 6.

The robot arm 2 in the present embodiment is a vertical articulated robot and includes a base member 21, arms 22, an end effector 23, joints 24, and a controller 29. Examples of the robot arm 2 are not limited to the vertical articulated robot.

The arms 22 are connected in series, with the base member 21 as a proximal end.

The base member 21, the arms 22, and the end effector 23 are rotatably coupled to the respective joints 24. The joints 24 each include a motor 241 and an encoder 242. Each of the arms 22 (or the end effector 23) coupled to a distal end of the corresponding one of the joints 24 is driven by the motor 241 of the joint 24. The position (speed) of the motor 241 is determined and output to the controller 29 by the encoder 242.

The end effector 23 is coupled to a distal end of the string of arms (the arms 22). The end effector 23 is provided with a grip mechanism 25 and a vision sensor 26.

The grip mechanism 25 is disposed at a distal end of the end effector 23 to grip any of the locators 4. The grip mechanism 25 in the present embodiment is structurally similar to clampers 34, which are provided to the bases 3 and will be described later. When being supplied with air pressure, the grip mechanism 25 is capable of gripping any of the locators 4. When the supply of air pressure to the grip mechanism 25 is interrupted, the grip mechanism 25 releases (stops gripping) the locator 4. The structure of the grip mechanism 25 is not limited to the above; that is, any mechanism that can be placed under the control of the control device 6 to grip and release any one of the locators 4 may be adopted.

The vision sensor 26 is attached to a proximal end of the end effector 23 and is oriented toward a distal end of the end effector 23. The vision sensor 26 has an imaging range 26R, which includes the sides of the distal end of the end effector 23. The vision sensor 26 produces photographic images of objects located within the imaging range 26R and outputs the images to the control device 6. The vision sensor 26 includes a lighting element 261, which illuminates the imaging range 26R. The vision sensor 26 may be any kind of sensor that can be used to obtain images of each base 3 (holes 31 in one of the divisions that are denoted by B and will be described later).

The proximal end of the end effector 23 is provided with a slide mechanism 27 and an excitation device 28.

The slide mechanism 27 supports the end effector 23. The end effector 23 supported by the slide mechanism 27 is movable in a plane orthogonal to the direction in which the end effector 23 extends. For example, the slide mechanism 27 includes two linear guides (not illustrated) that are orthogonal to each other in the plane mentioned above. The end effector 23 at a distal end of the slide mechanism 27 is supported on the two linear guides. The slide mechanism 27 is controlled by a pneumatic pin (not illustrated), the insertion and withdrawal of which can render the slide mechanism 27 mobile and immobile. The end effector 23 is equipped with a source of air supply for bringing the pin into action. The operation of the source of air supply is controlled in accordance with a control command given by the control device 6.

The excitation device 28 causes vibratory motion of the end effector 23 in a plane orthogonal to the direction in which the end effector 23 extends.

The controller 29 controls the operation of each member of the robot arm 2 in accordance with a control command given by the control device 6. For example, the controller 29 is configured to bring the motors 241, the grip mechanism 25, and the slide mechanism 27 into action and to output, to the control device 6, the information obtained by the encoders 242 and the information obtained by the vision sensor 26.

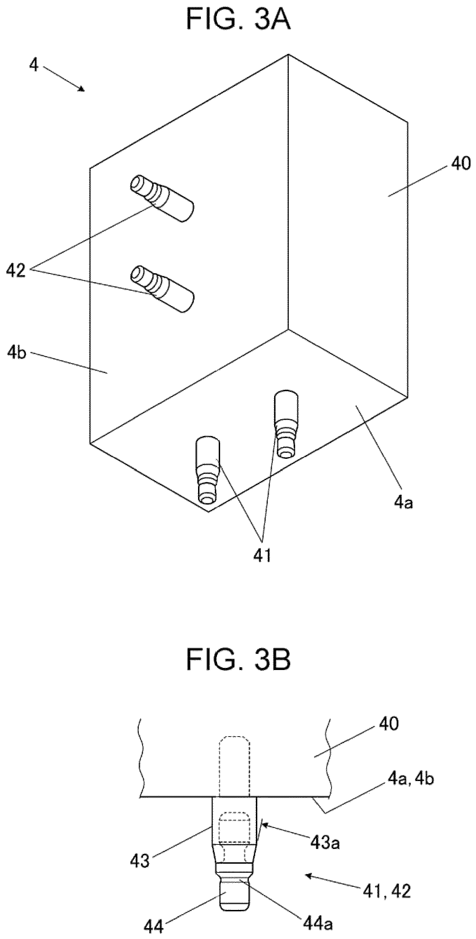

FIG. 3A is a perspective view of one of the locators 4. FIG. 3B is a side view of fixation pins 41 and grip pins 42, which are included in the locator 4 and will be described later.

The locators 4 are positioned on the base 3 to hold the workpieces W. The locators 4 can take various forms including those supporting clamps for fastening the workpieces W, those providing regions for placement of the workpieces W, and those for use in locating the workpieces W.

Referring to FIG. 3A, the locator 4 includes a locator main body 40, two fixation pins 41, and two grip pins 42. Each of the fixation pins 41 is disposed on a lower surface 4a of the locator main body 40 and fixed in an upright position. Each of the grip pins 42 is disposed on a side surface 4b of the locator main body 40 and fixed in an upright position.

The locator main body 40 may have any shape. For example, the locator main body 40 is cuboid. The fixation pins 41 are inserted into the base 3 so that the locator 4 can be fixed to the base 3. The robot arm 2 holds the grip pins 42 to grip the locator 4. The following describes the fixation pins 41. The grip pins 42 in the present embodiment are structurally similar to the fixation pins 41 and will not be further elaborated on here.

Referring to FIG. 3B, the fixation pins 41 each include a pin main body 43 and a clamp pin 44. The pin main body 43 is fixed to the locator 4. The clamp pin 44 is coaxially attached to a tip of the pin main body 43.

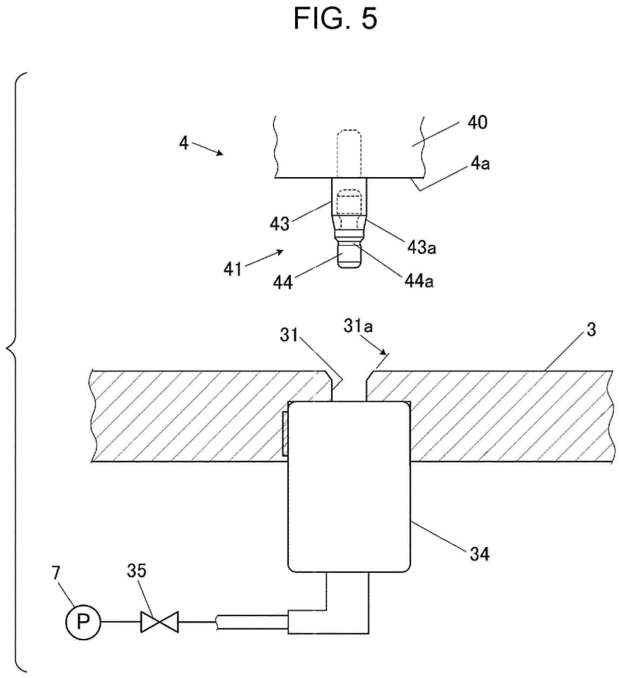

The pin main body 43 of a given outer diameter is inserted into any of the hole 31 of the base 3, with a predetermined fit tolerance. For example, the pin main body 43 is fitted in the hole 31, with a clearance being of the order of 0.01 mm. The pin main body 43 of one of the two fixation pins 41 is a round locating pin, and the pin main body 43 of the other fixation pin 41 is a diamond locating pin. The pin main body 43 has a chamfer 43a, which is in a corner at a tip of the pin main body 43. The chamfer 43a is steeper than a chamfer 31a (see FIG. 5) in each hole 31 of the base 3. For example, the angle formed by the chamfer 43a and the central axis of the pin main body 43 is not more than 30°. The chamfer 31a will be described later.

The clamp pin 44 is held by any of the clampers 34 (see FIG. 5) in the base 3. The clamp pin 44 has a groove 44a, against which fixing balls of the clamper 34 are pressed. The clampers 34 will be described later.

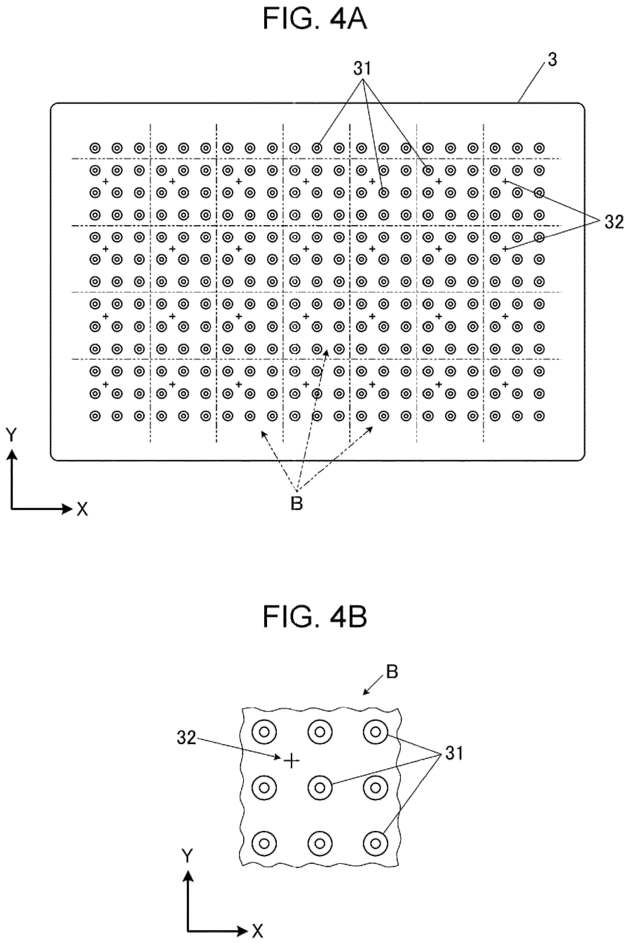

FIG. 4A is a plan view of one of the bases 3. FIG. 4B is an enlarged view of the holes 31 in one of the divisions of the base 3.

As illustrated in FIG. 4A, each base 3 is a rectangular surface plate made of iron and having an upper surface that is substantially parallel to a horizontal plane. The upper surface of each base 3 has multiple holes 31, into which the fixation pins 41 of the locators 4 can be inserted.

The holes 31 in each base 3 are arranged in a grid array extending in longitudinal direction (X direction) and a short-side direction (Y direction) of the upper surface of the base 3. The holes 31 are arranged with a predetermined degree of relative positional accuracy. Dash-dot-dot lines (imaginary lines) in FIG. 4A indicate the boundaries between the divisions, each of which is denoted by B and includes nine holes 31 arranged in a 3-by-3 matrix. The grid array in the example illustrated in FIG. 4A includes an additional row located on the +Y side and consisting of divisions in which the holes 31 are fewer in number than those in each division B. The number of holes 31 included in each division B is not limited to a particular value, and the holes 31 in each division B may be arranged in any pattern.

As illustrated in FIG. 4B, the divisions B are each marked with a crisscross 32, which is scribed at a predetermined point. The crisscross 32 indicates the reference position for the holes 31 in each division B and has a predetermined degree of positional accuracy relative to the holes 31. The position of the crisscross 32 in each division B is not limited to a particular point.

Referring to FIG. 5, the fixation pins 41 of the locators 4 can each be inserted into any of the holes 31 of a given inner diameter, with a predetermined fit tolerance. For example, the fixation pins 41 are each fitted in any of the hole 31, with a clearance being of the order of 0.01 mm. The holes 31 each have a chamfer, which is denoted by 31a and is in a corner at the top (upper) side. The chamfer 31a is less steep than the chamfers 43a of the fixation pins 41 of the locators 4. For example, the chamfer 31a forms an angle of 45°.

The holes 31 are provided with the respective clampers 34, which are fitted in the back (lower) side of the base 3 to hold any of the fixation pins 41 of the locators 4. Although not illustrated, each of the clampers 34 draws in the fixation pin 41 inserted into the corresponding one of the holes 31. For example, the fixing balls of the clamper 34 are pushed out by the application of air pressure and are held against the groove 44a of the clamp pin 44 such that the fixation pin 41 is drawn in and fixed in place. The air for actuating the clampers 34 is provided by an air pump 7, which is coupled to the clampers 34 with valves 35 therebetween. The opening degree of each valve 35 is controlled by the control device 6. The clampers 34 are not limited to clampers of a particular structure and may be, for example, hydraulic clampers.

Referring to FIG. 2, the locator rack 5 holds surplus locators, namely, the locators 4 that are not disposed on the base 3. The locator rack 5 is structurally similar to the base 3 and includes elements (e.g., holes 31, clampers 34, and valves 35) for fixing the locators 4 in place. In some embodiments, however, the locators 4 are simply placed on the locator rack 5.

The control device 6 is a computer that controls the operation of the jig positioning system 1. For example, the control device 6 includes an operation unit 62, a display 63, a storage 66, and a control unit 67.

The user can perform various kinds of operation on the operation unit 62 to effect the operation of the control device 6. For example, the operation unit 62 may be a pointing device, such as a mouse, or may be a keyboard.

The display 63 is a liquid crystal display, an organic electroluminescent (EL) display, or any other display that displays various kinds of information in accordance with display signals from the control unit 67. The display 63 may be a touch panel serving as part of the operation unit 62 or may have voice output capabilities.

The storage 66 is memory, such as random-access memory (RAM) or read-only memory (ROM). Various kinds of programs and data are stored in the storage 66. The storage 66 also serves as a work area for the control unit 67. Programs for carrying out jig positioning are prestored in the storage 66 in the present embodiment. The jig positioning will be described later.

The control unit 67 in one example is a central processing unit (CPU) and is configured to control the operation of modules constituting the control device 6. The control unit 67 may effect the operation of the modules of the control device 6 in accordance with, for example, the operation performed on the operation unit 62. The control unit 67 may also execute various kinds of processing by retrieving a program prestored in the storage 66 and running the program.

### Jig Positioning

The following describes the jig positioning carried out by interchanging the locators 4 between the two bases 3.

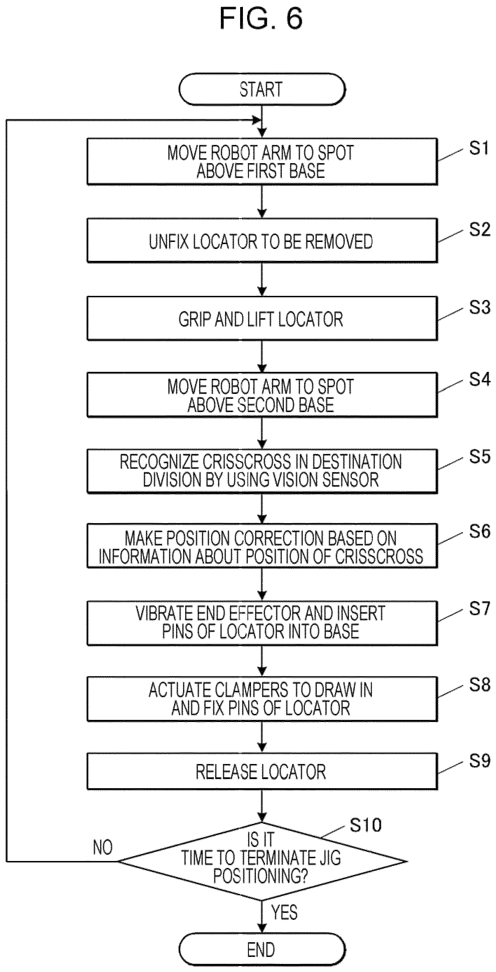

FIG. 6 is a flowchart of a jig positioning procedure.

In course of the jig positioning procedure, at least one of the locators 4 disposed on one of the two bases 3 and used to perform an assembly task on one of the workpieces W is relocated to the other base 3 where an assembly task is to be performed on another one of the workpieces W. The control unit 67 of the control device 6 commences the jig positioning by retrieving a relevant program from the storage 66 and running the program.

The base 3 on which the at least one locator 4 is disposed is hereinafter referred to as a first base 3a, and the other base 3 to which the locator 4 concerned is to be relocated is hereinafter referred to as a second base 3b.

Details concerning the relocation of the locators 4 are preprogrammed in connection with, for example, the shapes of the workpieces W. Examples of the information include: which of the locators 4 on the first base 3a (or the locator rack 5) is to be relocated to the second base 3b (or the locator rack 5); and the specific planned position and orientation of the locator 4 concerned. The relocated locator 4 placed on the second base 3b is in the position and orientation prespecified and preprogrammed in connection with the workpiece W on which an assembly task is to be performed.

As a first step of the jig positioning illustrated in FIG. 6, the control unit 67 causes the end effector 23 of the robot arm 2 to shift to a spot above the locator 4 to be removed from the first base 3a (Step S1).

The control unit 67 then stops the operation of the clamper 34 located in the first base 3a and fixing the locator 4 to be removed, and as a result, the locator 4 is unfixed (Step S2).

Subsequently, the control unit 67 causes the end effector 23 of the robot arm 2 to grip and lift the locator 4 to be removed such that the fixation pins 41 of the locator 4 are withdrawn from the holes 31 of the first base 3a (Step S3).

The control unit 67 may unfix the slide mechanism 27 and cause the excitation device 28 to vibrate the end effector 23 when the locator 4 is lifted. This facilitates the withdrawal of the fixation pins 41 of the locator 4 from the holes 31 of the first base 3a.

At least one of the locators 4 may be removed from the locator rack 5, not from the first base 3a. In such cases, the control unit 67 causes Steps S1 to S3 to take place on or above the locator rack 5, not on or above on the first base 3a.

The control unit 67 then causes the end effector 23 of the robot arm 2 to shift to a spot above the division B being part of the second base 3b and including the holes 31 in the destination of the locator 4 (the fixation pins 41) (Step S4).

Subsequently, the control unit 67 causes the vision sensor 26 to produce a photographic image of the division B including the holes 31 in the destination of the locator 4 and recognizes the crisscross 32 in the division B (Step S5). Accordingly, the control unit 67 acquires information about the position of the crisscross 32. When the two holes 31 in which the fixation pins 41 of the locator 4 are to be fitted are located in the two respective divisions B, one of the two crisscrosses 32 in the two respective divisions B may be recognized. For example, one of the crisscrosses 32 closer than the other crisscross 32 to the two holes 31 may be recognized. Alternatively, the two crisscrosses 32 in the two respective divisions B may be recognized.

The control unit 67 then corrects the position of the end effector 23 on the basis of the acquired information about the position of the crisscross 32 (Step S6). As a result, the control unit 67 can more accurately determine the positions of the holes 31 in the destination of the locator 4.

While causing the excitation device 28 to vibrate the end effector 23, the control unit 67 causes the end effector 23 to descend such that the fixation pins 41 of the locator 4 gripped by the end effector 23 are inserted into the holes 31 of the second base 3b (Step S7).

For example, the control unit 67 simply unfixes the slide mechanism 27 prior to the insertion of the fixation pins 41 into the holes 31. Each fixation pin 41 (each pin main body 43) is designed to be received with a relatively tight fit in the hole 31 into which it is inserted. For this reason, the chamfer 43a of the fixation pin 41 comes into contact with the chamfer 31a of the hole 31 before the pin main body 43 is completely inserted into the hole 31. When the chamfer 43a of the fixation pin 41 comes into contact with the chamfer 31a of the hole 31, the fixation pin 41 is centered so as to conform to the shape of the hole 31. With the slide mechanism 27 being unfixed, the end effector 23 can shift freely within a plane perpendicular to the direction of insertion. This ensures suitable centering of the fixation pins 41.

At the point in time when the centering of the fixation pins 41 is started, the control unit 67 causes the excitation device 28 to start vibrating the end effector 23. This facilitates the insertion of the fixation pins 41 into the holes 31.

The control unit 67 then actuates the clampers 34 provided for the holes 31 into which the fixation pins 41 are inserted. As a result, the fixation pins 41 are drawn in and fixed in place (Step S8). The control unit 67 actuates the clampers 34 at the point in time when the fixation pins 41 (clamp pins 44) are inserted into the holes 31 as much as possible (depressed by a predetermined distance) in Step S7. Accordingly, the locator 4 is fixed to the second base 3b. Once the locator 4 is fixed, the control unit 67 stops the operation of the excitation device 28.

Subsequently, the control unit 67 causes the end effector 23 of the robot arm 2 to release (stop gripping) the locator 4 (Step S9).

The locator 4 gripped in Step S3 may be relocated to the locator rack 5, not to the second base 3b. In such cases, the control unit 67 causes Steps S4, S7, and S8 to take place on or above the locator rack 5, not on or above the second base 3b; therefore, Steps S5 and S6 are skipped.

The control unit 67 then determines whether it is time to terminate the jig positioning (Step S10). When it is not time to terminate the jig positioning (No in Step S10), a return to Step S1 that is described above is made. The locators 4 on the first base 3a (or the locator rack 5) are selected in sequence and are relocated to the second base 3b (or the locator rack 5). This state is maintained until it is time to terminate the jig positioning.

When it is time to terminate the jig positioning (e.g., when all of the locators 4 are rearranged) (Yes in Step S10), the control unit 67 terminates the jig positioning.

An embodiment has been described in which the locators 4 are relocated in the following manner. One or more locators 4 specified for the workpieces W on which an assembly task is to be performed are selected in sequence and are gripped by the robot arm 2. The position and orientation of the locators 4 are adjusted in accordance with the shapes of the workpiece W in course of positioning of the locator 4 on the base 3.

This enables the automatic relocation of the locators 4 for the respective workpieces W. That is, each locator 4 can be suitably positioned for the corresponding workpiece W.

The use of each locator 4 for two or more different workpieces W enables a reduction in the number of jigs. This leads to reductions in production costs and reductions in management costs and also provides savings in the storage area for the jigs. Furthermore, it can be expected that automation of the manual process of relocating the locators 4 will reduce preparations and, by extension, man-hours and will improve safety through prevention of human error that can lead to malfunctions.

The end effector 23 of the robot arm 2 in the present embodiment is supported by the slide mechanism 27 and is movable in a plane orthogonal to the direction in which the fixation pins 41 are fitted in (inserted into) the holes 31.

When being positioned on the base 3, the locator 4 is moved along the holes 31 as the fixation pins 41 come into contact with the holes 31. That is, misalignment produced between each fixation pin 41 and the corresponding hole 31 by, for example, various types of errors can be suitably compensated for. Accordingly, a good fit is achieved between the fixation pin 41 and the hole 31 that are designed for a tight fit.

The excitation device 28 in the present embodiment vibrates the end effector 23 while the locator 4 is being positioned on the base 3 with the fixation pins 41 fitted in the holes 31.

This facilitates the insertion of the fixation pins 41 into the holes 31.

For example, the end effector 23 in the embodiment described above is movably supported by the slide mechanism 27 so that each of the locators 4 can be centered when the fixation pins 41 of the locator 4 are inserted into the holes 31.

In some embodiments, at least part of a main body 230 (see FIG. 1) of the end effector 23 configured to grip the locators 4 is made of an elastic material (e.g., resin), in which case the slide mechanism 27 is optional. The main body 230 of the end effector 23 can be elastically deformed to compensate for relative misalignment between each fixation pin 41 and the corresponding hole 31.

In the embodiment described above, the locators 4 include the fixation pins 41, and the base 3 has the holes 31. In some embodiments, however, the locators 4 have holes, and the base 3 are provided with pins.

The embodiment above describes the process of interchanging the locators 4 between the two bases 3. The disclosure is also applicable to the rearrangement of the locators 4 from the locator rack 5 to either of the bases 3 and the relocation of the locators 4 within either of the two bases 3. For example, the robot arm 2 arranges the locators 4 on the second base 3b while an assembly task is manually performed on the workpieces W through the use of the locators 4 positioned on the first base 3a. An assembly work is then manually performed on the workpieces W on the second base 3b, and meanwhile the robot arm 2 relocates the locators 4 on the first base 3a. Assembly tasks can be efficiently performed by repeated cycles of this process through mutual coordination between workers and collaborative robots. This provides a system suited for aircraft manufacturing characterized by low-volume, high-variety production.

Although the workpieces (assembly components) in the embodiment described above are aircraft parts, the disclosure can be suitably applied to assembly components other than aircraft parts.

The details described above in relation to the embodiment may be changed as appropriate within the scope of the claims.

The disclosure enables suitable positioning of assembly jigs for the respective assembly components.

The control device 6 illustrated in FIG. 2 can be implemented by circuitry including at least one semiconductor integrated circuit such as at least one processor (e.g., a central processing unit (CPU)), at least one application specific integrated circuit (ASIC), and/or at least one field programmable gate array (FPGA). At least one processor can be configured, by reading instructions from at least one machine readable tangible medium, to perform all or a part of functions of the control device 6 including the operation unit 62, the display 63, the storage 66, and the control unit 67. Such a medium may take many forms, including, but not limited to, any type of magnetic medium such as a hard disk, any type of optical medium such as a CD and a DVD, any type of semiconductor memory (i.e., semiconductor circuit) such as a volatile memory and a non-volatile memory. The volatile memory may include a DRAM and a SRAM, and the non-volatile memory may include a ROM and a NVRAM. The ASIC is an integrated circuit (IC) customized to perform, and the FPGA is an integrated circuit designed to be configured after manufacturing in order to perform, all or a part of the functions of the modules illustrated in FIG. 2.

## Claims

1. A jig positioning system (1) comprising:
a robot arm (2) being a vertical articulated robot, and including a base member (21), arms (22), an end effector (23), joints (24) and a controller (29), and configured to grip an assembly jig (4) including fixation pins (41) and grip pins (42) and designed to be positioned on an assembly table (3) having holes (31); and
a control unit (67) configured to control motion of the robot arm (2), wherein
the arms (22) are connected in series, with the base member (21) as a proximal end,
the base member (21), the arms (22), and the end effector (23) are rotatably coupled to the respective joints (24),
the end effector (23) is coupled to a distal end of the string of the arms (22), and is provided with a grip mechanism (25) and a vision sensor (26),
the grip mechanism (25) is disposed at a distal end of the end effector (23) to grip the assembly jig (4),
the vision sensor (26) is attached to a proximal end of the end effector (23) and is oriented toward a distal end of the end effector (23) to obtain images of each assembly table (3),
the proximal end of the end effector (23) is provided with a slide mechanism (27) and an excitation device (28),
the slide mechanism (27) supports the end effector (23) so that the end effector (23) is movable in a plane orthogonal to the direction in which the end effector (23) extends, the slide mechanism (27) includes two linear guides that are orthogonal to each other in the plane, the end effector (23) is supported on the two linear guides, and the slide mechanism (27) is controlled by a pneumatic pin, the insertion and withdrawal of which can render the slide mechanism (27) mobile and immobile,
the excitation device (28) causes vibratory motion of the end effector (23) in a plane orthogonal to the direction in which the end effector (23) extends,
the control unit (67) is configured to cause the robot arm (2)
to grip one or more assembly jigs (4) including the assembly jig (4), the one or more assembly jigs (4) being to be selected in sequence for assembly components (W), and
to adjust position and orientation of each of the one or more assembly jigs (4) in accordance with shapes of the assembly components (W) in course of positioning of the one or more assembly jigs (4) on the assembly table (3),
to unfix the slide mechanism (27) prior to the insertion of the fixation pins (41) into the holes (31) for centering of the fixation pins (41), and to cause the excitation device (28) to start vibrating the end effector (23) at the point in time when the centering of the fixation pins (41) is started, and
to unfix the slide mechanism (27) and cause the excitation device (28) to vibrate the end effector (23) when the assembly jig (4) is lifted for the withdrawal of the fixation pins (41) of the assembly jig (4) from the holes (31).

2. The jig positioning system according to claim 1, wherein at least part of a main body (230) of the end effector (23) configured to grip the locators (4) is made of resin such that the main body (230) of the end effector (23) is configured to be elastically deformed to compensate for relative misalignment between each fixation pin (41) and the corresponding hole (31).

## Patentansprüche

1. Montagegestell-Positioniersystem (1), das aufweist:
einen Roboterarm (2), der ein Vertikal-Gelenkroboter ist und ein Basisteil (21), Arme (22), einen Endeffektor (23), Gelenke (24) und eine Steuerung (29) aufweist und so konfiguriert ist, dass er eine Montagegestell-Anordnung (4) ergreift, die Passstifte (41) und Greifstifte (42) aufweist und so gestaltet ist, dass sie auf einem Montagetisch (3) mit Löchern (31) positioniert wird; und
eine Steuereinheit (67), die so konfiguriert ist, dass sie eine Bewegung des Roboterarms (2) steuert, wobei
die Arme (22) in Reihe mit dem Basisteil (21) als proximales Ende verbunden sind,
das Basisteil (21), die Arme (22) und der Endeffektor (23) mit den jeweiligen Gelenken (24) drehbar verbunden sind,
der Endeffektor (23) mit einem distalen Ende der Folge der Arme (22) gekoppelt und mit einem Greifmechanismus (25) und einem Sichtsensor (26) versehen ist,
der Greifmechanismus (25) an einem distalen Ende des Endeffektors (23) angeordnet ist, um die Montagegestell-Anordnung (4) zu ergreifen,
der Sichtsensor (26) an einem proximalen Ende des Endeffektors (23) angebracht und hin zu einem distalen Ende des Endeffektors (23) orientiert ist, um Bilder jedes Montagetischs (3) zu erhalten,
das proximale Ende des Endeffektors (23) mit einem Gleitmechanismus (27) und einem Erregungsbauelement (28) versehen ist,
der Gleitmechanismus (27) den Endeffektor (23) so stützt, dass der Endeffektor (23) in einer Ebene orthogonal zu der Richtung beweglich ist, in der sich der Endeffektor (23) erstreckt, der Gleitmechanismus (27) zwei Linearführungen aufweist, die orthogonal zueinander in der Ebene sind, der Endeffektor (23) auf den zwei Linearführungen gestützt wird und der Gleitmechanismus (27) durch einen pneumatischen Stift gesteuert wird, dessen Einrücken und Ausrücken den Gleitmechanismus (27) mobil und immobil machen kann,
das Erregungsbauelement (28) eine Schwingungsbewegung des Endeffektors (23) in einer Ebene orthogonal zu der Richtung bewirkt, in der sich der Endeffektor (23) erstreckt,
die Steuereinheit (67) so konfiguriert ist, dass sie den Roboterarm (2) veranlasst:
eine oder mehrere Montagegestell-Anordnungen (4), darunter die Montagegestell-Anordnung (4), zu ergreifen, wobei die eine oder die mehreren Montagegestell-Anordnungen (4) dazu dienen, für Montagekomponenten (W) nacheinander ausgewählt zu werden, und
eine Position und Orientierung jeder der einen oder der mehreren Montagegestell-Anordnungen (4) in Übereinstimmung mit Formen der Montagekomponenten (W) im Zuge der Positionierung der einen oder der mehreren Montagegestell-Anordnungen (4) auf dem Montagetisch (3) einzustellen,
den Gleitmechanismus (27) vor dem Einrücken der Passstifte (41) in die Löcher (31) zum Zentrieren der Passstifte (41) zu lösen und das Erregungsbauelement (28) zu veranlassen, ein Schwingen des Endeffektors (23) zu dem Zeitpunkt zu starten, zu dem das Zentrieren der Passstifte (41) gestartet wird, und
den Gleitmechanismus (27) zu lösen und das Erregungsbauelement (28) zu veranlassen, den Endeffektor (23) schwingen zu lassen, wenn die Montagegestell-Anordnung zum Ausrücken der Passstifte (41) der Montagegestell-Anordnung (4) aus den Löchern (31) angehoben wird.

2. Montagegestell-Positioniersystem nach Anspruch 1, wobei zumindest ein Teil eines Hauptkörpers (230) des Endeffektors (23), der so konfiguriert ist, dass er die Positionierelemente (4) ergreift, aus Harz hergestellt ist, so dass der Hauptkörper (230) des Endeffektors (23) so konfiguriert ist, dass er elastisch verformt wird, um eine relative Fehlausrichtung zwischen jedem Passstift (41) und dem entsprechenden Loch (31) auszugleichen.

## Revendications

1. Système de positionnement de gabarit (1) comprenant :
un bras de robot (2) qui est un robot articulé vertical et comprenant un élément de base (21), des bras (22), un effecteur terminal (23), des joints (24) et un organe de commande (29) et configuré pour saisir un gabarit d'assemblage (4) comprenant des broches de fixation (41) et des broches de préhension (42) et conçu pour être positionné sur une table d'assemblage (3) comportant des trous (31) ; et
une unité de commande (67) configurée pour commander le mouvement du bras de robot (2), dans lequel :
les bras (22) sont raccordés en série, avec l'élément de base (21) en tant qu'extrémité proximale,
l'élément de base (21), les bras (22), l'effecteur terminal (23) sont couplés, en rotation, aux joints (24) respectifs,
l'effecteur terminal (23) est couplé à une extrémité distale de la chaîne des bras (22), et est prévu avec un mécanisme de préhension (25) et un capteur de vision (26),
le mécanisme de préhension (25) est disposé au niveau d'une extrémité distale de l'effecteur terminal (23) afin de saisir le gabarit d'assemblage (4),
le capteur de vision (26) est fixé à une extrémité proximale de l'effecteur terminal (23) et est orienté vers une extrémité distale de l'effecteur terminal (23) afin d'obtenir des images de chaque table d'assemblage (3),
l'extrémité proximale de l'effecteur terminal (23) est prévue avec un mécanisme de coulissement (27) et un dispositif d'excitation (28),
le mécanisme de coulissement (27) supporte l'effecteur terminal (23) de sorte que l'effecteur terminal (23) est mobile dans un plan orthogonal à la direction dans laquelle l'effecteur terminal (23) s'étend, le mécanisme de coulissement (27) comprend deux guides linéaires qui sont orthogonaux entre eux dans le plan, l'effecteur terminal (23) est supporté sur les deux guides linéaires, et le mécanisme de coulissement (27) est commandé par une broche pneumatique, dont l'insertion et le retrait peuvent rendre le mécanisme de coulissement (27) mobile et immobile,
le dispositif d'excitation (28) provoque le mouvement vibratoire de l'effecteur terminal (23) dans un plan orthogonal à la direction dans laquelle l'effecteur terminal (23) s'étend,
l'unité de commande (67) est configurée pour amener le bras de robot (2) :
à saisir un ou plusieurs gabarits d'assemblage (4) comprenant le gabarit d'assemblage (4), les un ou plusieurs gabarits d'assemblage (4) devant être sélectionnés en séquence pour les composants d'assemblage (W), et
à régler la position et l'orientation de chacun des un ou plusieurs gabarits d'assemblage (4) selon les formes des composants d'assemblage (W) au cours du positionnement des un ou plusieurs gabarits d'assemblage (4) sur la table d'assemblage (3),
à détacher le mécanisme de coulissement (27) avant l'insertion des broches de fixation (41) dans les trous (31) pour le centrage des broches de fixation (41) et à amener le dispositif d'excitation (28) à démarrer la vibration de l'effecteur terminal (23) au moment où le centrage des broches de fixation (41) a démarré, et
à détacher le mécanisme de coulissement (27) et à amener le dispositif d'excitation (28) à faire vibrer l'effecteur terminal (23) lorsque le gabarit d'assemblage (4) est levé pour le retrait des broches de fixation (41) du gabarit d'assemblage (4) des trous (31).

2. Système de positionnement de gabarit selon la revendication 1, dans lequel au moins une partie d'un corps principal (230) de l'effecteur terminal (23) configurée pour saisir les dispositifs de positionnement (4) est réalisée à partir de résine de sorte que le corps principal (230) de l'effecteur terminal (23) est configuré pour être élastiquement déformé afin de compenser le défaut d'alignement relatif entre chaque broche de fixation (41) et le trou (31) correspondant.
